# EUROPEAN PATENT APPLICATION

(11) **EP 4 303 180 A1**
(43) Date of publication of application: **10.01.2024**
(21) Application number: 22763246.0
(22) Date of filing: 01.03.2022
(51) Int. Cl.: C01B 21/064, C08K 3/38, C08L 63/02, C08L 101/00, H01B 3/00, H01B 3/30, H01B 17/56

(54) **HEXAGONAL BORON NITRIDE AGGLOMERATED PARTICLES, HEXAGONAL BORON NITRIDE POWDER, RESIN COMPOSITION, AND RESIN SHEET**

(30) Priority: 02.03.2021 JP 2021032919; 10.05.2021 JP 2021079939
(71) Applicant: Tokuyama Corporation, Shunan-shi, Yamaguchi 745-8648 (JP)
(72) Inventor: DAIKI, Shota, Shunan-shi, Yamaguchi 745-8648 (JP); FUJINAMI, Kyouichi, Shunan-shi, Yamaguchi 745-8648 (JP); NAWATA, Teruhiko, Shunan-shi, Yamaguchi 745-8648 (JP); YOSHIDA, Satoru, Shunan-shi, Yamaguchi 745-8648 (JP)
(74) Representative: Dehns
(86) International application number: PCT/JP2022/008571
(87) International publication number: WO 2022/186191

(57) **Abstract**

Provided are hexagonal boron nitride aggregated particles and hexagonal boron nitride powder, each of which can be filled into a resin to produce a resin composition with an extremely high dielectric strength and thermal conductivity, and to reduce the density of the resin composition. Provided are hexagonal boron nitride aggregated particles, in which aggregated particles of hexagonal boron nitride primary particles have a longer diameter ranging from 5 to 10 µm, a longer diameter/shorter diameter ranging from 1.0 to 1.3, and a circularity within a range from 0.3 to 0.8, and a maximum diameter of primary particles which can be confirmed on the surface of the aggregated particles on an SEM observation image at 10,000 magnification is 4 um or less. Provided is a hexagonal boron nitride powder including aggregated particles of hexagonal boron nitride primary particles, in which a particle size (D₅₀) at a cumulative volume frequency of 50% in a particle size distribution as measured by a wet laser diffraction particle size distribution analysis is from 5 to 150 µm, a volume-based median diameter of pores as measured by a mercury porosimetry is 3.0 um or less, and a content of impurity elements is 500 ppm or less.

## Description

### Technical Field

The present invention relates to novel hexagonal boron nitride aggregated particles and a hexagonal boron nitride powder and uses thereof. The present invention specifically provides hexagonal boron nitride aggregated particles and a hexagonal boron nitride powder each of which can be filled into a resin to produce a resin composition with extremely high dielectric strength and thermal conductivity, and which can reduce the density and weight of the above-mentioned resin composition.

### Background Art

The hexagonal boron nitride powder is typically a white powder having a hexagonal layered structure similar to graphite, and has many characteristics such as high thermal conductivity, high electrical insulation, high lubricity, corrosion resistance, mold releasability, high-temperature stability, and chemical stability. For this reason, resin compositions having the hexagonal boron nitride powder filled are mold fabricated and favorably used as thermal conductive insulating sheets.

In recent years, there has been an increasing demand for insulating sheets with low dielectric constant, low dielectric loss tangent, and with high thermal conductivity intended for use in high frequency devices, and there has been a growing demand for hexagonal boron nitride powder having a dielectric constant lower than that of other high thermal conductive filler of aluminum nitride or aluminum oxide.

In particular, hexagonal boron nitride powder having a lower specific gravity than that of other high thermal conductive filler of aluminum nitride or aluminum oxide is attracting attention for use as a low specific gravity thermal conductivity insulating sheet for vehicles.

The hexagonal boron nitride powder and the hexagonal boron nitride aggregated particles included therein contain primary particles including flaky particles derived from its crystal structure, and the flaky particles have thermal anisotropy. Therefore, in the case of a thermal conductive insulating sheet in which a boron nitride powder containing the above-mentioned flaky particles as single particles is used as a filler, the flaky particles are oriented in the plane direction of the thermal conductive insulating sheet, and hence heat is transferred in the c-axis direction with low thermal conductivity of the flaky particles, consequently the thermal conductivity in the thickness direction of the thermal conductive insulating sheet is low.

In order to improve the thermal anisotropy of the hexagonal boron nitride particles having such flaky structure, there has been proposed a hexagonal boron nitride powder containing aggregated particles in which flaky particles of hexagonal boron nitride are oriented in random directions and aggregated.

There have been proposed: aggregated particles in which flaky particles are randomly oriented by spray-granulating such as spray-drying and reheating of amorphous boron nitride powder; crushed body of sintered compact in which flaky particles are randomly oriented after press molding and sintering of mixed powders of amorphous boron nitride powder and an auxiliary agent such as an oxide; for example (see Patent Literature 1). In these aggregated particles, flaky particles, as primary particles included in aggregation, have a large diameter, and most of the primary particles have a size exceeding 10 um. It is considered that when the boron nitride powder including the above-mentioned aggregated particles is filled in a resin, the resin permeates into air gaps among primary particles as flaky particles thereby filling the air gaps, as a result large air bubbles are less likely to be present in the resin composition, so that high dielectric strength is exhibited.

However, there is still room for improvement in the above-mentioned dielectric strength. That is, when the powder is filled into a resin, the resin easily permeates into a large air gap, but when the gap becomes smaller toward the central part of the aggregated particles or a continuous long gap is formed, in the resin composition, there is a concern of remaining voids having a size large enough to reduce the dielectric strength. In particular, when the resin has a high viscosity, this tendency becomes notable. In addition to the above-mentioned problems, there is a concern that the sintered compact may cause a decrease in dielectric strength due to the inclusion of impurity elements as a sintering aid.

In the aggregated particles in which voids are reduced by the permeation of the resin into the air gaps in the aggregated particles, the specific gravity of the boron nitride powder in the resin composition is nearly equal to that of the bulk body, consequently the weight reduction of the resin composition cannot be achieved.

In addition, the present applicant has proposed a hexagonal boron nitride powder characterized in that a maximum torque is from 0.20 to 0.50 Nm, a DBP absorption is from 50 to 100 ml/100 g, and a tapped bulk density is from 0.66 to 0.95 g/cm³ (see Patent Literature 2).

The invention described in the above-mentioned patent document is intended to provide a hexagonal boron nitride powder which is easily filled in a resin, requires a little solvent for varnishing, develops a high thermal conductivity when being filled in a resin, has almost no relatively large air gaps adversely affecting dielectric strength, and can impart high dielectric strength to a resin composition.

However, hexagonal boron nitride particles included in the powder form so dense aggregation that the particle size of each of primary particles cannot be confirmed, and further improvement in terms of the weight reduction by formation of air gaps in the particles as well as the improvement in dielectric strength has been desired.

### Citation List

### Patent Literature

Patent Literature 1: JP 2017-165609 A
Patent Literature 2: WO 2018-123571 A

### Summary of Invention

### Technical Problem

An object of the present invention is, therefore, to provide hexagonal boron nitride aggregated particles and hexagonal boron nitride powder each of which can be filled into a resin to produce a resin composition with an extremely high dielectric strength while developing a high thermal conductivity when filled into a resin by eliminating an anisotropic thermal conduction with aggregation in the hexagonal boron nitride powder that contains aggregated particles as aggregated flaky primary particles of hexagonal boron nitride, and which can further achieve the weight reduction of the resin composition.

### Solution to Problem

The present inventors have conducted intensive studies in order to solve the above-mentioned problems. As a result, a specific manufacturing method is adopted when performing a reductive nitriding reaction using an oxygen-containing boron compound, a carbon source, and an oxygen-containing calcium compound, which are known raw materials for obtaining boron nitride by the reductive nitriding method, a specific production method. Thus, the obtained hexagonal boron nitride agglomerated particles and hexagonal boron nitride powder are free from anisotropy in thermal conductivity due to agglomeration of the scale-like primary particles. Furthermore, since aggregated particles are formed during the above reaction, the scale-like primary particles constituting the aggregated particles are small, so that the gaps formed between the randomly oriented scale-like primary particles are extremely small, as a result, the weight reduction of the resin composition can also be achieved. Thus, the present inventors have confirmed that all the problems can be solved, and the present invention has been completed.

That is, according to the present invention, there is provided hexagonal boron nitride aggregated particles (hereinafter, also referred to as specific hexagonal boron nitride aggregated particles) which are aggregated particles of hexagonal boron nitride primary particles, and have a longer diameter ranging from 5 to 10 µm, a longer diameter/shorter diameter ranging from 1.0 to 1.3, and a circularity ranging from 0.3 to 0.8, and a maximum diameter of primary particles that can be confirmed on the surfaces of the aggregated particles is 4 um or less with an SEM observation image at 10,000 magnification.

Furthermore, according to the present invention, there is provided a hexagonal boron nitride powder including aggregated particles of hexagonal boron nitride primary particles, in which a particle size (D₅₀) at a cumulative volume frequency of 50% in a particle size distribution measured by a wet laser diffraction particle size distribution analysis is from 5 to 150 µm, a volume-based median diameter of pores measured by a mercury porosimetry is 3.0 um or less, and a content of impurity elements is 500 ppm or less.

Furthermore, according to the present invention, there is provided a hexagonal boron nitride powder containing the specific hexagonal boron nitride aggregated particles as the aggregated particles of the hexagonal boron nitride primary particles.

The hexagonal boron nitride powder described above preferably has a BET specific surface area ranging from 1 to 15 m²/g and an oil absorption ranging from 50 to 190 cc/100 g.

When the specific hexagonal boron nitride aggregated particles of the present invention are used together with hexagonal boron nitride single particles having no pores, hexagonal boron nitride powder covering the thermal anisotropy of the single particles can be formed without reducing the dielectric strength. That is, according to the present invention, there is provided a hexagonal boron nitride powder including specific hexagonal boron nitride aggregated particles and hexagonal boron nitride single particles, in which a content ratio of the above-mentioned specific hexagonal boron nitride aggregated particles is 5% or more, and a particle size (D₅₀) at a cumulative volume frequency of 50% in a particle size distribution measured by a wet laser diffraction particle size distribution analysis is from 5 to 150 µm.

Furthermore, the present invention also provides a resin composition having the boron nitride powder filled as a filler, having excellent thermal conductivity, and exhibiting high dielectric strength, and a resin sheet including the above-mentioned resin composition.

### Advantageous Effects of Invention

The specific hexagonal boron nitride aggregated particles of the present invention include aggregated particles of minute flaky primary particles of hexagonal boron nitride, and exhibit an effect of aggregation enabling to eliminate the anisotropic thermal conductivity, and in addition to the above-mentioned characteristics, there are minute pores on the surfaces of the aggregated particles, whereby excellent characteristics not found in conventional aggregates are developed. That is, the primary particles included in the specific hexagonal boron nitride aggregated particles of the present invention are minute, so that the gaps among the particles are extremely small, and unlike the gaps among the conventional aggregated particles of plate-shaped particles, voids present in such gaps have little influence on the dielectric strength when the particles are filled in the resin.

Since the hexagonal boron nitride powder of the present invention includes aggregated particles of minute flaky primary particles of hexagonal boron nitride, the hexagonal boron nitride powder exhibits an effect to eliminate the anisotropic thermal conductivity, and further, in addition to the above-mentioned characteristics, there is a densely aggregated structure of the above-mentioned minute primary particles of hexagonal boron nitride, whereby minute pores are formed on the surfaces of the aggregated particles, and an excellent characteristics not found in conventional aggregates are developed.
That is, when the aggregated particles of the primary particles included in the hexagonal boron nitride powder of the present invention are filled in the resin, as described above, voids present in such gaps have little influence on the dielectric strength.

Therefore, the resin composition having the hexagonal boron nitride powder filled, or the resin composition in which the hexagonal boron nitride powder containing the specific hexagonal boron nitride aggregated particles is filled can exhibit an extremely high dielectric strength. In addition, the above-mentioned gaps present in the aggregated particles enable to reduce the weight of the hexagonal boron nitride powder and therefore also to reduce the weight of the resin composition produced by filling this hexagonal boron nitride powder.

In addition, both the specific hexagonal boron nitride aggregated particles and the hexagonal boron nitride powder of the present invention can be manufactured without adopting a sintering method requiring a sintering aid, and hence have a low impurity element content, and can be highly purified, which results in that a decrease in dielectric strength of the resin composition can be minimized.

### Brief Description of Drawings

Fig. 1 is an SEM photograph of specific aggregated particles in a hexagonal boron nitride powder produced in Example A1.

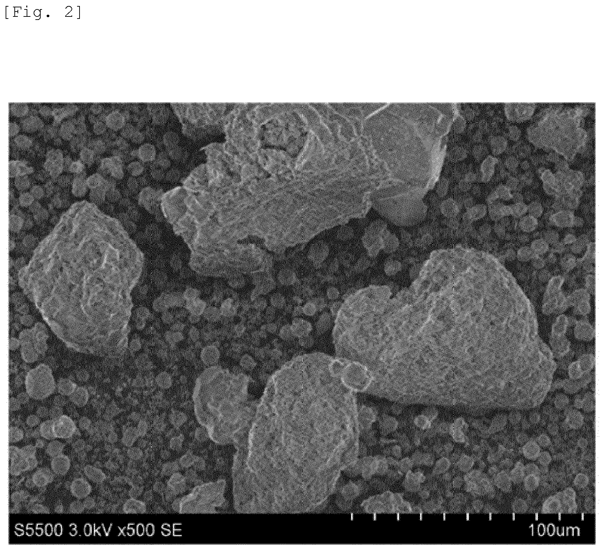

Fig. 2 is an SEM photograph of a hexagonal boron nitride powder produced in Example A1.
Fig. 3 is an SEM photograph of the surface of coarse aggregated particles of a hexagonal boron nitride powder produced in Example A1.

### Description of Embodiments

### (Specific hexagonal boron nitride aggregated particles)

The specific hexagonal boron nitride aggregated particles of the present invention are aggregated particles of hexagonal boron nitride primary particles, and are characterized in that the longer diameter is from 5 to 10 µm, a ratio of the longer diameter/shorter diameter is from 1.0 to 1.3, and the circularity is within a range from 0.3 to 0.8, and the maximum diameter of primary particles that can be confirmed on the surfaces of the aggregated particles is 4 um or less from an SEM observation image at 10,000 magnification.

Note that, the identification of hexagonal boron nitride was carried out in X-ray diffraction measurement, and the sample powder was identified as hexagonal boron nitride powder by confirming that there were no peaks other than those attributed to hexagonal boron nitride. Here, the above-mentioned X-ray diffraction measurement is conducted with a fully automatic horizontal multipurpose X-ray diffractometer SmartLab (trade name) manufactured by Rigaku Corporation. The measurement conditions are: a scan speed of 20 degrees/minute; a step width of 0.02 degrees; and a scan range from 10 to 90 degrees. The GI value representing the crystallinity of the hexagonal boron nitride powder is calculated from the integrated intensity ratio (area ratio) of the (100), (101) and (102) diffraction lines in the X-ray diffraction spectrum of the hexagonal boron nitride powder by the formula GI = [{(100) + (101)}/[(102)].

The GI value of the hexagonal boron nitride powder is 2.5 or less, and this was also confirmed in the specific hexagonal boron nitride aggregated particles produced in Examples.

The specific hexagonal boron nitride aggregated particles of the present invention include aggregates of flaky primary particles of hexagonal boron nitride. Such aggregates can be obtained not by a manufacturing method of aggregating once produced flaky hexagonal boron nitride single particles as in a conventional granulating method or a sintering method, but by adopting specific reaction conditions for synthesizing hexagonal boron nitride to generate aggregated particles during the reaction.

Therefore, the specific hexagonal boron nitride aggregated particles of the present invention include minute flaky primary particles of hexagonal boron nitride, and include extremely small primary particles having a maximum diameter of 4 um or less, particularly 3 um or less, which can be confirmed on the surfaces of the aggregated particles from an SEM observation image at 10,000 magnification. As a result, the gaps in the aggregated particles are extremely small, and when the particles are filled into a resin, voids present in the above-mentioned gaps have little influence on the dielectric strength, and the resulting resin composition can exhibit an extremely high dielectric strength. In addition, the presence of pores (gaps) on the surface of and in the aggregated particles enables to reduce the weight of the resin composition produced by filling the hexagonal boron nitride powder.

The blending of the specific hexagonal boron nitride aggregated particles of the present invention having a longer diameter ranging from 5 to 10 um, a longer diameter/shorter diameter ranging from 1.0 to 1.3, and a circularity ranging from 0.3 to 0.8 into a resin composition in combination with other hexagonal boron nitride particles is effective to impart an excellent fluidity, to enhance an effect of improving the filling property into the resin, and to improve the thermal conductivity of the resin composition.

Note that the above-mentioned longer diameter and the shorter diameter were calculated from an SEM observation image at 10,000 magnification.
In addition, the circularity was determined on an SEM observation image at 10,000 magnification with use of an image analysis software by using the formula of 4π × (area)/(peripheral length)².

According to the manufacturing method described later, it is difficult to manufacture a pure powder only includes the specific hexagonal boron nitride aggregated particles of the present invention, and aggregated particles having various shapes and sizes are generated. For this reason, it is preferable to use powders having an increased content ratio of specific hexagonal boron nitride aggregated particles by removing coarse grains and fine particles by classification, for example.

As described above, with respect to the specific hexagonal boron nitride aggregated particles of the present invention, the median pore diameter cannot be selectively measured. However it has been confirmed that the aggregated particles included in the hexagonal boron nitride powder produced by the manufacturing method described later have a similar pore structure based on dense aggregation of minute primary particles. Therefore, by measuring the pore diameter of above-mentioned hexagonal boron nitride powder, the median pore diameter of the pores of the specific hexagonal boron nitride aggregated particles can be specified. In the present invention, the median pore diameter of such specific hexagonal boron nitride aggregated particles is preferably 3.0 um or less, preferably 2.8 um, and more preferably 2.5 um or less. Similarly, with respect to the specific hexagonal boron nitride aggregated particles of the present invention, the pore volume of pores having a pore diameter within the range up to 3 um is preferably 0.5 cm³/g or more, and preferably from 0.5 to 2.0 cm³/g.

The volume-based median pore diameter and the pore volume were calculated from an integrated pore size distribution having the pore size plotted on the horizontal axis and the integrated pore volume plotted on the vertical axis obtained from the measurement of pores ranging from 0.0036 um to 200 um by a mercury porosimetry with AutoPore IV 9520 manufactured by Micromeritics Instrument Corporation.

The specific hexagonal boron nitride aggregated particles of the present invention are produced by a method without sintering aids by a manufacturing method described later, and hence have high purity without any decrease in purity due to sintering aids, and, for example, work together with the effect of the pores being small when used as a filler in a resin composition included in an insulating sheet, thereby contributing to enhance withstand voltage property. That is, the specific hexagonal boron nitride aggregated particles of the present invention preferably have a content of impurity elements of 500 ppm or less, particularly 400 ppm or less.

The impurity element used herein refers to calcium, magnesium, sodium, aluminum, lithium, strontium, iron, sulfur, nickel, chromium, manganese, silicon, phosphorus, titanium, barium, and cobalt elements. The content of the impurity elements refers to the total content of the above-mentioned impurity elements.

The impurity element content ratio of the hexagonal boron nitride aggregated particles is measured by a fluorescent X-ray spectroscopy for the hexagonal boron nitride powder produced in the manufacturing described later. Note that, ZSX Primus 2 (trade name) manufactured by Rigaku Corporation was used as an X-ray fluorescence spectrometer in Examples.

The fact that C% is 0.04% or less and O% is 0.4% or less, together with the fact that the amount of impurity elements is little, in the specific hexagonal boron nitride aggregated particles of the present invention is more effective in improving the thermal conductivity and the dielectric strength.

The O% in the specific hexagonal boron nitride aggregated particles was measured with an oxygen/nitrogen analyzer EMGA-620 manufactured by HORIBA, Ltd. The C% in the hexagonal boron nitride powder was measured with EMIA-110 manufactured by HORIBA, Ltd.

### (Hexagonal boron nitride powder)

The hexagonal boron nitride powder of the present invention includes aggregated particles of hexagonal boron nitride primary particles, and is characterized in that the volume-based median pore diameter is 3 um or less and the content of impurity elements is 500 ppm or less.

Note that the identification of hexagonal boron nitride for the hexagonal boron nitride powder was the same as that for the specific hexagonal boron nitride aggregated particles. When the sample powder is subjected to X-ray diffraction measurement, it is confirmed that there are no attributed peaks other than hexagonal boron nitride, and this is identified as hexagonal boron nitride powder.
Here, the above-mentioned X-ray diffraction measurement was similar to that for the specific hexagonal boron nitride aggregated particles, and the GI value of the hexagonal boron nitride powder of the present invention was 2.5 or less, and this was confirmed also in Examples.

The hexagonal boron nitride powder of the present invention includes aggregates of flaky primary particles of hexagonal boron nitride, and such aggregates can be produced not by a manufacturing method of aggregating once produced flaky hexagonal boron nitride single particles as in a conventional granulation method or sintering method, but by adopting specific reaction conditions for synthesizing hexagonal boron nitride and generating aggregated particles.

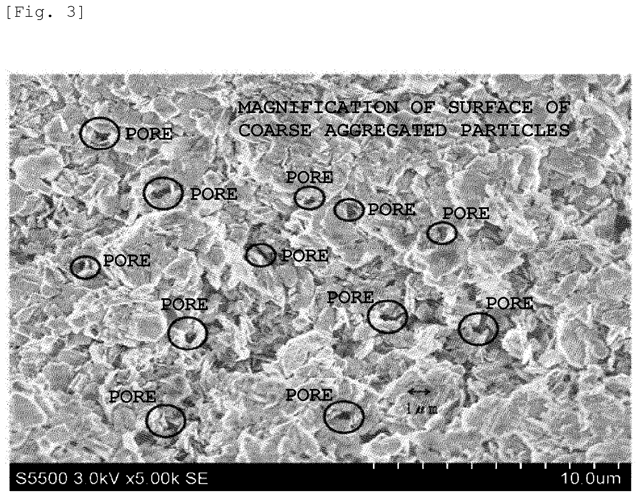

Therefore, the aggregated particles included in the hexagonal boron nitride powder of the present invention include minute flaky primary particles of hexagonal boron nitride, the gaps among the aggregated particles are extremely small, and the volume-based median diameter of the pores shows a characteristic value of 3.0 um or less.
Such volume-based median diameter is preferably 2.8 um, and more preferably 2.5 um or less.
In a case where the above-mentioned volume-based median pore diameter is more than 3.0 um, air bubbles that affect dielectric strength tend to remain when the particle is filled into a resin, and high dielectric strength is difficult to exhibit.
In other words, in a case where the volume-based median diameter of the pores of the aggregated particles included in the hexagonal boron nitride powder of the present invention exhibits the above value, voids present in the gaps have little effect on the dielectric strength when the powder is filled into a resin, and the resulting resin composition can exhibit extremely high dielectric strength.
In addition, the presence of pores (gaps) on the surface of and in the aggregated particles enables to reduce the weight of the resin composition produced by filling the hexagonal boron nitride powder.
The above-mentioned pores can be confirmed by the SEM photograph of Fig. 3.

In addition to the volume-based median diameter of the pores of the aggregated particles, the fact that the pore volume for pores having a pore diameter within a range up to 3 um is 0.2 cm³/g or more, and preferably is from 0.5 to 2.0 cm³/g in the hexagonal boron nitride powder of the present invention is preferable in order to further enhance an effect of reducing the weight of the resin composition owing to the remnant of pores.

The volume-based median pore diameter and the pore volume were calculated from an integrated pore size distribution having the pore size plotted on the horizontal axis and the integrated pore volume plotted on the vertical axis obtained by measuring pores ranging from 0.0036 um to 200 um by a mercury porosimetry with AutoPore IV 9520 manufactured by Shimadzu Corporation.

The hexagonal boron nitride powder of the present invention is produced by a method without sintering aids by a manufacturing method described later, and hence has high purity without any decrease in purity due to sintering aids, and, for example, work together with the effect of the pores being small when used as a filler in a resin composition included in an insulating sheet, thereby contributing to enhance withstand voltage property. In other words, the hexagonal boron nitride powder of the present invention is characterized in that it has a high purity such as a content of impurity elements being 500 ppm or less, particularly 400 ppm or less.

Examples of the impurity elements referred herein include those similar in the specific hexagonal boron nitride aggregated particles, and the content of impurity elements refers to the total content of the above-mentioned impurity elements.

The impurity element content ratio of the hexagonal boron nitride powder is measured in the same manner as for the specific hexagonal boron nitride aggregated particles.

The fact that C% is 0.04% or less and O% is 0.4% or less, together with the fact that the amount of impurity elements is small, in the hexagonal boron nitride powder of the present invention is more effective in improving the thermal conductivity and the dielectric strength.

The O% of the hexagonal boron nitride powder is measured in the same manner as for the specific hexagonal boron nitride aggregated particles.

With respect to the particle diameter of the hexagonal boron nitride powder of the present invention, also including the case of a mixed hexagonal boron nitride powder described later, and in consideration of the filling property into a resin, the particle size (D₅₀) at a cumulative volume frequency of 50% in particle size distribution in a wet laser diffraction particle size distribution analysis is from 5 to 150 um, and preferably, a particle diameter ranging from 10 to 100 µm, particularly ranging from 20 to 80 um is recommended. In order to adjust to the above-mentioned particle diameter, a coarse hexagonal boron nitride powder produced by a manufacturing method described later can be separated in sieve classification method, for example, from coarse aggregated particles, specifically, aggregated particles having a size of more than 200 µm, particularly more than 150 um, thereby making the hexagonal boron nitride powder of the present invention. A hexagonal boron nitride powder can also be made by crushing selectively collected coarse particles into an appropriate size, and then putting them back into the hexagonal boron nitride powder.

Note that, LA-950 V2 (trade name) manufactured by HORIBA, Ltd is used in Examples for the measurement of the particle size by the wet laser diffraction particle size distribution analysis. The hexagonal boron nitride powder of the present invention preferably has a specific surface area ranging from 1 to 15 m²/g, more preferably ranging from 1.5 to 14.0 m²/g, and still more preferably ranging from 2.0 to 13.0 m²/g.

That is, the hexagonal boron nitride powder having a specific surface area greater than 15.0 m²/g means that it contains a large amount of fine particles. Such hexagonal boron nitride powder has a large content of low crystallinity boron nitride powder, and is not preferable from the viewpoint of not only causing an increase thermal resistance in the insulating heat dissipation sheet, but also adverse effects of handling properties such as an increase of powders swirling in the air. In contrast, a hexagonal boron nitride powder having a specific surface area less than 1 m²/g is not preferable because it has an increased ratio of squamous hexagonal boron nitride single particles by growth into grains.

Therefore, due to the anisotropy of the thermal conductivity, there is a possibility that the thermal conductivity of the resin composition when filled in the resin may be lowered, which is not preferable.

The specific surface area of the above-mentioned hexagonal boron nitride powder is a value measured by a BET 1-point method, and in Examples, the specific surface area is measured with Macsorb HM model-1201 (trade name) manufactured by Mountech Co., Ltd.

The hexagonal boron nitride powder of the present invention preferably has an oil absorption ranging from 50 to 190 ml/100 g, particularly ranging from 55 to 170 ml/100 g, further preferably ranging from 60 to 150 ml/100 g. That is, the above-mentioned DBP absorption is an indicator for the amount of open pores in the aggregated particles, a sign of a presence or absence of the structure on the particle surface, and the wettability with the resin among the characteristics of the hexagonal boron nitride powder, and the larger the number of open pores and the more the structure is developed, the higher the DBP absorption. That is, a powder having very low oil absorption is not preferable, because of that it has large open pores, and its structure is insufficiently developed; a powder having very high oil absorption tends to be opposite and is not preferable, because of that large air bubbles are easily formed when the powder is filled into a resin composition. Note that, in the hexagonal boron nitride powder of the present invention, the aggregated particles included therein include extremely minute primary particles, and hence even when the structure has been developed the open pores formed by this structure are small, and there are no problems when the powder is filled into a resin composition.

The above-mentioned oil absorption of the hexagonal boron nitride powder is measured in accordance with the procedure shown in JIS K 5101-13-1: 2004 ("Test methods for pigments"-Part 13: Oil absorption- Section 1: Refined linseed oil method).

Furthermore, the hexagonal boron nitride powder of the present invention preferably has a tapped bulk density of 0.40 g/cm³ or more.
That is, the above-mentioned tapped bulk density is an indicator for the particle shape and the width of particle size distribution among the characteristics of the hexagonal boron nitride powder. A high tap density indicates a state in which there are few large open pores, there are many aggregated particles that are nearly spherical, and the particle size distribution is nearly closest packing. When the above-mentioned hexagonal boron nitride powder of the present invention has an increased content of the specific hexagonal boron nitride aggregated particles described later, the gaps in the powder can be easily filled, and the above-mentioned tapped bulk density can be increased. Note that, all the hexagonal boron nitride powders prepared in Examples had a tapped bulk density of 0.40 g/cm³ or more.

The hexagonal boron nitride powder of the present invention is preferably in a configuration in which aggregated particles of hexagonal boron nitride primary particles (hereinafter, also referred to as spherical hexagonal boron nitride aggregated particles) having a longer diameter ranging from 5 to 10 µm, a longer diameter/shorter diameter ranging from 1.0 to 1.3, and a circularity ranging from 0.3 to 0.8 are contained at a ratio of 5% or more, preferably 10% or more. These spherical hexagonal boron nitride aggregated particles are most preferably the above-mentioned specific hexagonal boron nitride aggregated particles. That is, as understood from the manufacturing method described later, the specific hexagonal boron nitride aggregated particles are produced as the hexagonal boron nitride powder that contains hexagonal boron nitride aggregated particles inevitably generated in the reaction, and the hexagonal boron nitride aggregated particles included in such powder have a structure in which minute primary particles in common are densely aggregated. Therefore, the inclusion of the specific hexagonal boron nitride particles as spherical hexagonal boron nitride aggregated particles can be said to be most preferable in view of satisfying the characteristics of the hexagonal boron nitride powder of the present invention.

Note that spherical hexagonal boron nitride aggregated particles other than the above-mentioned specific hexagonal boron nitride aggregated particles can also be used as long as the above-mentioned characteristics of the hexagonal boron nitride powder of the present invention are satisfied and the above-mentioned longer diameter, ratio, and circularity are satisfied.

Note that the longer diameter, longer diameter/shorter diameter, and circularity are confirmed and determined on an SEM observation image at 10,000 magnification, in the same manner as for the specific hexagonal boron nitride aggregated particles.

The hexagonal boron nitride powder of the present invention can be mixed with a hexagonal boron nitride powder containing other hexagonal boron nitride particles to the extent that the above characteristics are satisfied. The above-mentioned powder mixed with the other hexagonal boron nitride particles is also referred to as "mixed hexagonal boron nitride powder".

The mixed hexagonal boron nitride powder contains specific hexagonal boron nitride aggregated particles and other hexagonal boron nitride particles, and the content ratio of the above-mentioned specific hexagonal boron nitride aggregated particles is 5% or more, preferably 10% or more, and further preferably 20% or more.

In the present invention, the other hexagonal boron nitride powder to be mixed is not particularly restricted as long as it does not affect the characteristics of the hexagonal boron nitride of the present invention, but it is preferable a powder including hexagonal boron nitride single particles after which is filled into a resin the generation of voids is suppressed. The above-mentioned hexagonal boron nitride single particles generally have a squamous shape and have an anisotropy in heat conduction, but when filled into a resin, they come into contact with aggregated particles of hexagonal boron nitride primary particles, in particular, with specific hexagonal boron nitride aggregated particles, thereby eliminating the above-mentioned anisotropy, and an excellent thermal conductivity can be exhibited.

The above-mentioned hexagonal boron nitride single particles preferably have an aspect ratio of the particles (the ratio of longer diameter to thickness of particles (longer diameter/thickness)) ranging from 3 to 20, and a longer diameter ranging from 1 to 30 um. The hexagonal boron nitride aggregated particles other than the specific hexagonal boron nitride aggregated particles can be used together as long as the effect of the present invention owing to the specific hexagonal boron nitride aggregated particles is not significantly inhibited.

In the hexagonal boron nitride powder of the present invention, including the case of mixed hexagonal boron nitride powder, the spherical hexagonal boron nitride aggregated particles as a representative of the specific hexagonal boron nitride aggregated particles have an appropriate size suitable for filling gaps among other aggregated particles, and are approximately spherical. Therefore, by containing it in mixed the hexagonal boron nitride powder at the above-mentioned ratio, the filling property of the hexagonal boron nitride powder into a resin can be enhanced, and the remnant of relatively large air bubbles can be effectively suppressed, it can be inferred that this contributes to improvement in the dielectric strength of the resin composition.

The percentage of the spherical hexagonal boron nitride aggregated particles in the mixed hexagonal boron nitride powder is preferably larger than the above-mentioned lower limit value because of that the above-mentioned action is further promoted, and in the case of specific hexagonal boron nitride aggregated particles, the hexagonal boron nitride powder produced by a manufacturing method described later is preferably increased its percentage by separating particles having a relatively large particle diameter in the sieve classification, for example.

The specific hexagonal boron nitride aggregated particles are generated as a portion of a hexagonal boron nitride powder by a manufacturing method described later, and are characterized in that hexagonal boron nitride primary particles included in the aggregated particles are all of a smaller size than other aggregated particles, and most of the primary particles have a longer diameter of 4 um or less, and such characteristics also contribute to improvement of dielectric strength in the resin composition.

Note that, in the present invention, the content ratio (%) of the spherical hexagonal boron nitride aggregated particles in the mixed hexagonal boron nitride powder, including the case of specific hexagonal boron nitride aggregated particles, can be determined using the following method.
First, a dry-type vibrating sieving machine KFC-500-1D manufactured by KOWA KOGYOSHO CO.,LTD. is used and a stainless mesh sieve having an opening of 45 um is used, hexagonal boron nitride powder is sifted for 30 minutes and separated into the undersize product and the residue on sieve 45 um, and the weight ratio X% of the undersize product of sieve 45 um is determined.
Thereafter, spherical hexagonal boron nitride aggregated particles such as specific hexagonal boron nitride aggregated particles are separated from other particles on an SEM observation image at 500 magnification of the collected undersize product of sieve 45 um, and the area ratio Y% in SEM observation image of the spherical hexagonal boron nitride aggregated particles undersize of sieve 45 um is determined. Finally, the ratio (X × Y × 0.01)% obtained by the multiplication of the weight ratio X% of the undersize product of sieve 45 um and the area ratio Y% in SEM observation image of the spherical hexagonal boron nitride aggregated particles undersize of sieve 45 um is defined as the spherical hexagonal boron nitride aggregate particle ratio in the present invention. For example, when the weight ratio X of the hexagonal boron nitride powder undersize of sieve 45 um is 20% by weight, and the area ratio Y in SEM observation image of the spherical hexagonal boron nitride aggregated particles undersize of sieve 45 um is 60%, the spherical hexagonal boron nitride aggregated particle ratio Z is calculated as 20 × 60 × 0.01 = 12%.

In the hexagonal boron nitride powder of the present invention, the median pore diameter of the mixed hexagonal boron nitride powder containing the specific hexagonal boron nitride aggregated particles and other hexagonal boron nitride particles is preferably 3.0 um or less, preferably 2.8 um or less, and more preferably 2.5 um or less as with the specific hexagonal boron nitride aggregated particles. It is preferable in the above-mentioned hexagonal boron nitride powder that the pore volume of pores having a pore diameter in a range up to 3 um is 0.5 cm³/g or more, and preferably from 0.5 to 2.0 cm³/g. As described above, the other hexagonal boron nitride particles in the hexagonal boron nitride powder are preferably single particles in order to also maintain the characteristics of the specific hexagonal boron nitride aggregated particles.

The measurement of the volume-based median pore diameter and the pore volume can be performed in the same manner as with the specific hexagonal boron nitride aggregated particles.

### (Method of manufacturing boron nitride powder)

The method of manufacturing the specific hexagonal boron nitride aggregated particles and the hexagonal boron nitride powder of the present invention is not particularly restricted. Examples of representative manufacturing methods include a manufacturing method in which an oxygen-containing boron compound having a residue on 425 um sieve of 3% by mass or less, a carbon source, and an oxygen-containing calcium compound are mixed so as a ratio in terms of B/C (elemental ratio), which is a ratio of a B source contained in the oxygen-containing boron compound to a C source contained in the carbon source, to be from 0.63 to 0.73, and the oxygen-containing calcium compound in terms of CaO to be from 4 to 12 parts by mass with respect to 100 parts by mass of a total amount of the oxygen-containing boron compound (in terms of B₂O₃) and the carbon source (in terms of C), the mixture is then heated to a maximum temperature ranging from 1910 to 2000°C under a nitrogen atmosphere thereby undergoing reductive nitriding, followed by acid washing to remove byproducts other than boron nitride present in the reaction product.

### (Starting materials)

The largest feature of the above-mentioned manufacturing method of the present invention is that an oxygen-containing boron compound having a controlled particle size, a carbon source, and an oxygen-containing calcium compound, as starting materials, are mixed at a predetermined ratio, as described later, followed by reductive nitriding at a high temperature of 1910°C or higher. The roles of various starting materials are as follows.

### (Oxygen-containing boron compound)

In the above-mentioned manufacturing method of the present invention, a compound containing a boron atom is used without restrictions for the oxygen-containing boron compound of the starting material. For example, boric acid, boric anhydride, metaboric acid, perboric acid, hypoboric acid, sodium tetraborate, sodium perborate, for example can be used. In most cases, boric acid and boron oxide, which are easily available, are suitably used. With respect to the average particle diameter of the oxygen-containing boron compound to be used, a residue on a 425 um sieve is 3% by mass or less, and preferably 1.5% by mass or less. In particular, a residue on a 300 um sieve is more preferably 50% or less, and a residue on a 250 um sieve is still more preferably 70% or less. That is, when the oxygen-containing boron compound has a residue on a 425 um sieve of 3% by mass or more, coarse boron nitride aggregated particles having a size of 150 um or more are likely to remain, and remnant air gaps in the coarse aggregated particles are increased, consequently the median pore diameter becomes greater than 3 um in the resultant hexagonal boron nitride powder, this results in a decrease in dielectric strength.

### (Oxygen-containing calcium compound)

An oxygen-containing calcium compound is combined with an oxygen-containing boron compound to form a complex oxide so that a complex oxide having a high melting point is formed, and hence has a role of preventing the volatilization of the oxygen-containing boron compound.

In the manufacturing method of the present invention, as the oxygen-containing calcium compound to be used as a catalyst and a volatilization inhibitor for the oxygen-containing boron compound, known compounds are used without particular restriction, and in particular, oxygen-containing calcium compounds containing oxygen and calcium are suitably used. Examples of the oxygen-containing calcium compound include calcium carbonate, calcium hydrogen carbonate, calcium hydroxide, calcium oxide, calcium nitrate, calcium sulfate, calcium phosphate, and calcium oxalate. Among them, an oxygen-containing calcium compound can be suitably used. As the oxygen-containing calcium compound, for example, calcium carbonate, calcium hydrogen carbonate, calcium hydroxide, calcium oxide, calcium nitrate, calcium sulfate, calcium phosphate, calcium oxalate, for example, can be used, and a mixture of two or more thereof can also be used. Among them, calcium oxide and/or calcium carbonate are preferably used.

A mixture of two or more kinds of the above-mentioned oxygen-containing calcium compounds can be used. With respect to the average particle diameter of the above-mentioned oxygen-containing calcium compound, the average particle diameter is preferably from 0.01 to 200 µm, more preferably from 0.05 to 120 µm, and particularly preferably from 0.1 to 80 µm.

### (Carbon source)

In the manufacturing method of the present invention, as the carbon source, a known carbon material that acts as a reducing agent is used without particular restriction. Examples thereof include: amorphous carbon such as carbon black, activated carbon, and carbon fiber; crystalline carbon such as diamond, graphite, and nanocarbon; and thermally decomposed carbon produced by thermally decomposing a monomer or a polymer. Among them, highly reactive amorphous carbon is preferable, and furthermore carbon black is particularly suitably used from the viewpoint of its quality that is controlled at an industrial level. As the above-mentioned carbon black, acetylene black, furnace black, thermal black, for example, can be used. The average particle diameter of the above-mentioned carbon source is preferably from 0.01 to 5 µm, more preferably from 0.02 to 4 µm, and particularly preferably from 0.05 to 3 um. That is, when the average particle diameter of the carbon source is 5 um or less, the reactivity of the carbon source is enhanced, and when the average particle diameter is 0.01 um or more, its handling is facilitated.

In the manufacturing method of the present invention, the feeding form of the mixture containing each of the above-mentioned starting materials into the reaction system is not particularly restricted, and the mixture may be used as they are in powder form, or may be formed into a granulated body.

In the manufacturing method of the present invention, the method of mixing the starting materials is not particularly restricted, and a general-purposed mixer such as a vibration mill, a bead mill, a ball mill, a Henschel mixer, a drum mixer, a vibration stirrer, or a V-shaped mixer can be used.

A granulation method in the case of performing granulation can also be conducted, using a binder as necessary, by a known method such as extrusion granulation, tumbling granulation, or granulation with a compactor. In this case, the size of the granulated body is preferably from 5 to 10 mm approximately.

### (Preparation of starting materials)

The method of manufacturing the specific hexagonal boron nitride aggregated particles and the hexagonal boron nitride powder of the present invention is not particularly restricted. Examples of representative manufacturing methods include a manufacturing method in which an oxygen-containing boron compound having a residue on 425 um sieve of 3% by mass or less, a carbon source, and an oxygen-containing calcium compound are mixed so as a ratio in terms of B/C (elemental ratio), which is a ratio of a B source contained in the oxygen-containing boron compound to a C source contained in the carbon source, to be from 0.63 to 0.73, and the oxygen-containing calcium compound in terms of CaO to be from 4 to 12 parts by mass with respect to 100 parts by mass of a total amount of the oxygen-containing boron compound (in terms of B₂O₃) and the carbon source (in terms of C), the mixture is then heated to a maximum temperature ranging from 1910 to 2000°C under a nitrogen atmosphere thereby undergoing reductive nitriding, followed by acid washing to remove byproducts other than boron nitride present in the reaction product.

In the present invention, in order to effectively obtain intended hexagonal boron nitride aggregated particles, the oxygen-containing calcium compound is required to be mixed at a ratio ranging from 4 to 12 parts by mass in terms of CaO with respect to 100 parts by mass of the total amount of the oxygen-containing boron compound (in terms of B₂O₃) and the carbon source (in terms of C). At this time, the content ratio of 4 parts by mass or less in terms of CaO is not preferable, because of that the percentage of the boron compound that volatilizes without being reduced increases, and not only the yield decreases, but also the melting point of CaO-B₂O₃ complex oxide that is formed from the oxygen-containing calcium compound combined with the remnant boron compound is lowered, and the grain growth of hexagonal boron nitride particles is promoted, whereby intended aggregated particles having pores are less likely to be formed. The content ratio of 12 parts by mass or more in terms of CaO is not preferable, because of that impurities derived from calcium are liable to remain.

In the present invention, intended aggregated particles having a small primary particle diameter can be highly selectively prepared without excessive grain growth by adjusting the particle sizes of the above-mentioned starting materials and the composition ratio.

### (Reduction-nitridation)

In the manufacturing method of boron nitride of the present invention, the feed of the nitrogen source to the reaction system can be carried out by a known method. For example, a method of circulating nitrogen gas through the reaction system of the reaction apparatus exemplified later is most common. The nitrogen source to be used is not limited to the above-mentioned nitrogen gas, and is not particularly restricted as long as it is a gas that allows nitriding in the reduction-nitridation reaction. Specifically, besides the nitrogen gas, ammonia gas can also be used. Alternatively, a gas of nitrogen gas, ammonia gas, mixed with a non-oxidizing gas such as hydrogen, argon, or helium can also be used.

In the above-mentioned manufacturing method, it is required to adopt a typical temperature ranging from 1910°C to 2000°C, or a preferable temperature ranging from 1920 to 1980°C for a heating temperature in the reduction-nitridation reaction in order to obtain a hexagonal boron nitride powder having high crystallinity and pores. The heating temperature ranging from 1910°C to 2000°C elicits effects of increasing the crystallinity of the hexagonal boron nitride particles, forming sharper outer periphery of the primary particle shape, and increasing minute pores among the particles. When the temperature is lower than 1910°C, the reduction-nitridation reaction does not proceed, and white hexagonal boron nitride having high crystallinity is difficult to obtain, and the temperature higher than 2000°C is not preferable because of that the effects reach a plateau, which is not only economically disadvantageous, but also the damage to the heating furnace increases.

The time duration of the reduction-nitridation reaction is suitably set, but typically is from 6 to 30 hours appropriately.

The above manufacturing method can be conducted with a known reaction apparatus capable of controlling a reaction atmosphere. Examples thereof include an atmosphere-controlled high-temperature furnace where a heating treatment is conducted with high-frequency induction heating or heater heating, and other than a batch furnace, a continuous furnace such as a pusher-type tunnel furnace or a vertical reacting furnace can also be used.

### (Acid washing)

In the manufacturing method of the present invention, the reaction product obtained by the reduction nitriding described above is preferably washed with an acid, since impurities such as a complex oxide containing boron oxide-calcium oxide may be remained in addition to the hexagonal boron nitride. The method of such acid washing is not particularly restricted, and a known method is adopted without restriction. Examples thereof include a method in which byproduct-containing boron nitride obtained after the nitriding treatment is crushed and put into a container, thereto is added a dilute hydrochloric acid (5 to 20% by mass of HCl) five to ten times larger than the amount of the hexagonal boron nitride powder containing impurities, and then allowed to contact each other for 4 to 8 hours.

As the acid used in the above-mentioned acid washing, besides hydrochloric acid, there can be used nitric acid, sulfuric acid, acetic acid, for example.

After the above-mentioned acid washing, the reaction product is washed with pure water in order to wash out the remaining acid. As the above-mentioned washing method, the acid used in the above-mentioned acid washing is filtered out, and then the boron nitride underwent the acid washing is dispersed in the same amount of pure water as that of the acid used, and filtered again.

### (Drying)

With respect to the drying condition of the hydrated lump product after the above-mentioned acid washing and the water washing, drying in the air at 50 to 250°C or under reduced pressure is preferable. The drying time is not particularly specified, but the product is preferably dried until the water content is extremely close to 0%.

### (Classification)

The dried boron nitride powder may be crushed, as needed, followed by sifting with a sieve, for example, to remove coarse grains, and/or air flow classification, for example, to remove fine particles.

By the above-mentioned method, the hexagonal boron nitride powder of the present invention containing specific hexagonal boron nitride can be produced. Note that, it is preferable that classification processes such as coarse grain removal, air flow classification, for example, to remove fine particles, or wet classification, is conducted as needed thereby making the obtained hexagonal boron nitride powder into a hexagonal boron nitride powder having an increased content ratio of specific hexagonal boron nitride aggregated particles. The above-mentioned classification process is preferably a dry sieve classification process, in particular, and the sieve preferably has an opening ranging from 30 to 90 µm.

### (Use of boron nitride powder)

The use of the boron nitride powder of the present invention is not particularly limited, and can be applied to known uses without particular restrictions. Examples of suitably usable applications include applications of using as a filler in a resin for the purpose of improving electrical insulation, and imparting thermal conductivity, for example. In the above-mentioned use of the boron nitride powder, the resultant resin composition has high electrical insulation properties and thermal conductivity. In particular, in the above-mentioned use of the powder containing the specific boron nitride aggregated particles, the resultant resin composition has not only high thermal conductivity but also high electrical insulation with a dielectric strength of 80 kV/mm or more.

The resin composition of the present invention can be used for known applications without restrictions, but can be mixed with a resin described later to form a thermal conductive resin composition or a thermal conductive molded article so as to be preferably used for applications: for example, thermal interface materials such as polymer heat dissipation sheets and phase change sheets; organic heat dissipation sheets such as heat dissipation tapes, heat dissipation greases, heat dissipation adhesives, and gap fillers; heat dissipation coating materials such as heat dissipation paints and heat dissipation coats; heat dissipation resin substrates such as PWB base resin substrates and CCL base resin substrates; insulating layers for metal base substrates such as aluminum base substrates and copper base substrates; sealing materials for power devices; and interlayer insulating films.

When filled into a resin composition, the boron nitride powder of the present invention can be mixed and used with a thermal conductive filler such as aluminum nitride or aluminum oxide, each of which is a typical high thermal conductive insulating filler.

Examples of the resin include: thermoplastic resins such as polyolefin, vinyl chloride resin, methyl methacrylate resin, nylon, and fluororesin; thermosetting resins such as epoxy resin, phenol resin, urea resin, melamine resin, unsaturated polyester resin, silicon resin, and bismaleimide triazine resin; fluororesin, liquid crystalline polymer, and synthetic rubber.

The above-mentioned resin composition may contain known additives such as a polymerization initiator, a curing agent, a polymerization inhibitor, a polymerization retarder, a coupling agent, a plasticizer, an ultraviolet absorber, a pigment, a dye, an antibacterial agent, an organic filler, and an organic-inorganic composite filler, as known compounding agents of the resin composition, as necessary. Moreover, other inorganic fillers may be contained to the extent that the effects of the present invention are not impaired.

The boron nitride powder of the present invention can also be used in applications: starting materials for boron nitride processed products such as cubic boron nitride or boron nitride molded products; nucleating agents for engineering plastics; phase change materials; solid or liquid thermal interface materials; release agents for molten metal and molten glass molding molds; cosmetics; and starting materials for composite ceramics, for example.

### Examples

Hereinafter, the present invention will be described in more detail by referring to Examples, but the present invention is not limited to these Examples.

Note that, in Examples, various measurements are values measured by the following method.

### [Volume-based median pore diameter (pm)] and [Volume of pores having a size up to 3 um (cm³/g)]

For the obtained specific hexagonal boron nitride aggregated particles and hexagonal boron nitride powder, the volume-based median pore diameter (D1) was measured by a mercury porosimetry. The median diameter was calculated from the integrated pore size distribution having the pore diameter plotted on the horizontal axis and the integrated pore volume plotted on the vertical axis in determining the pore size distribution ranging from 0.0036 um to 200 µm. AutoPore IV 9520 manufactured by Micromeritics Instrument Corporation was used for the calculation.

### [Particle size D2 (µm) at cumulative volume frequency of 50% in particle size distribution of hexagonal boron nitride powder]

For the obtained hexagonal boron nitride powder, the particle size (D2) at a cumulative volume frequency of 50% in the particle size distribution was measured with LA-950 V2 manufactured by HORIBA, Ltd. The particle size distribution of the hexagonal boron nitride powder was measured with a particle size analyzer MT 3000 manufactured by Nikkiso Co., Ltd. Note that, the measurement samples were prepared by the following method. First, 20 g of ethanol was added as a dispersion medium to a 50 mL screw tube bottle, and 1 g of hexagonal boron nitride powder was dispersed in ethanol. The particle size at a cumulative volume frequency of 50% in the obtained particle size distribution was defined as (D2).

### [Oil absorption of hexagonal boron nitride powder in accordance with JIS K 5101-13-1: 2004]

The oil absorption of the obtained hexagonal boron nitride powder was determined according to the procedure shown in JIS K 5101-13-1: 2004 ("Test methods for pigments"-Part 13: Oil absorption- Section 1: Refined linseed oil method).

### [Specific surface area (m²/g) of hexagonal boron nitride powder]

For the obtained hexagonal boron nitride powder, the specific surface area was measured with Macsorb HM model-1201 manufactured by Mountech Co., Ltd.

### [Impurity element concentration (% by mass) in hexagonal boron nitride powder]

For the obtained hexagonal boron nitride powder, the concentration of impurity elements (calcium, magnesium, sodium, aluminum, lithium, strontium, iron, sulfur, nickel, chromium, manganese, silicon, phosphorus, titanium, barium, cobalt) in the hexagonal boron nitride powder was measured with ZSX Primus 2 (trade name) manufactured by Rigaku Corporation.

### Example A1

A Spartan mixer was used to mix 195 g of boron oxide having a residue on a 425 um sieve of 2.1% by mass, 99 g of carbon black, and 55.2 g of calcium carbonate. The mixture has an elemental ratio in terms of (B/C) of 0.68, and the mass content ratio of the above-mentioned oxygen-containing calcium compound in terms of CaO with respect to 100 parts by mass of the total mass of the oxygen-containing boron compound in terms of B₂O₃ and the carbon source in terms of C is 10.5 parts by mass. With a Tammann-furnace made of graphite, 1500 g of the mixture was treated with nitriding by holding at 1500°C for 6 hours and then at 1940°C for 4 hours in a nitrogen gas atmosphere.

Subsequently, a byproduct-containing boron nitride was crushed and put into a vessel, thereto was added hydrochloric acid (7% by mass of HCl) five times larger than the amount of the byproduct-containing boron nitride, and the mixture was stirred with three one motor for 24 hours at a rotation speed of 350 rpm. After the acid washing, the acid was filtered out, and boron nitride obtained by the filtering was dispersed in the same amount of pure water as that of the acid used, and the resultant dispersion was filtered again. This operation was repeated until the aqueous solution after filtration became neutral, followed by vacuum drying at 200°C for 12 hours.

The powder obtained after drying was sifted through a sieve having an opening of 90 um to give a white hexagonal boron nitride powder. Various physical properties of the obtained hexagonal boron nitride powder were measured by the methods described above, and are shown in Tables 1 and 2.

### Example A2

The procedure was similar to that in Example A1 except that boron oxide had a residue on a 425 um sieve of 2.9% by mass, the elemental ratio in terms of (B/C) was 0.72, and the mass content ratio of the above-mentioned oxygen-containing calcium compound in terms of CaO with respect to 100 parts by mass of the total mass of the oxygen-containing boron compound in terms of B₂O₃ and the carbon source in terms of C was 8 parts by mass. Various conditions and measured values are shown in Tables 1 and 2.

### Example A3

The procedure was similar to that in Example A1 except that boron oxide had a residue on a 425 um sieve of 1.0% by mass, the elemental ratio in terms of (B/C) was 0.65, and the mass content ratio of the above-mentioned oxygen-containing calcium compound in terms of CaO with respect to 100 parts by mass of the total mass of the oxygen-containing boron compound in terms of B₂O₃ and the carbon source in terms of C was 6 parts by mass. Various conditions and measured values are shown in Tables 1 and 2.

### Example A4

The procedure was similar to that in Example A1 except that the boron oxide had a residue on a 425 um sieve of 0.1% by mass and a residue on a 300 um of 15.0% by mass. Various conditions and measured values are shown in Tables 1 and 2.

### Example A5

The procedure was similar to that in Example A1 except that boron oxide had a residue on a 425 um sieve of 0.5% by mass, the elemental ratio in terms of (B/C) was 0.70, and the mass content ratio of the above-mentioned oxygen-containing calcium compound in terms of CaO with respect to 100 parts by mass of the total mass of the oxygen-containing boron compound in terms of B₂O₃ and the carbon source in terms of C was 8 parts by mass. The obtained boron nitride powder was treated with the above-mentioned 45 um sieving to prepare a sample having a percentage of specific hexagonal boron nitride aggregated particles increased to 52%. The measured values are shown in Tables 1 and 2.

### Comparative Examples A1 to A6

The procedure was similar to that in Example A1 except that various conditions and the sections indicated in Table 1 were changed. Various conditions and measured values are shown in Tables 1 and 2. The hexagonal boron nitride powder prepared in Comparative Example A2 did not contain the hexagonal boron nitride aggregated particles corresponding to the present invention. The hexagonal boron nitride powder prepared in Comparative Example A6 was not a white powder, carbon has been partially remained, and a black portion has been confirmed therein, and its powder properties have not been analyzed.

### [Resin composition]

The boron nitride powders produced in Examples A1 to A6 each were filled into an epoxy resin to prepare a resin composition, and its thermal conductivity was evaluated. There was prepared a mixture of 100 parts by mass of an epoxy resin (JER 828 manufactured by Mitsubishi Chemical Corporation), 5 parts by mass of a curing agent (Imidazolebased curing agent: CUREZOL 2E4MZ manufactured by Shikoku Chemicals Corporation), and 210 parts by mass of methyl ethyl ketone as a solvent. Next, the above-mentioned varnishlike mixture and the hexagonal boron nitride powder were mixed in a rotating and revolving mixer (MAZERUSTAR manufactured by Kurabo Industries Ltd.) so the content of the base material resin as to be 35% by volume and the content of the boron nitride powders produced in each of Examples A1 to A6 as to be 65% by volume, so that a resin composition was produced.

An automatic coater PI-1210 manufactured by TESTER SANGYO CO., LTD., was used for coating/drying of the above-mentioned resin composition onto a PET film with a thickness ranging from 250 to 300 um approximately, and cured under reduced pressure on conditions of a temperature of 200°C, a pressure of 5 MPa, and a retention time of 30 minutes to prepare a sheet having a thickness of 220 um. The sheet was analyzed with a temperature wave thermal analyzer, and the calculated results of thermal conductivity are shown in Table 3. Each sheet in which the hexagonal boron nitride powder prepared in each of Example 1 to 5 was filled had a high thermal conductivity of 8.5 W/m·K or more. In addition, as a result of measuring the dielectric strength with a withstand voltage tester (manufactured by TAMADENSOKU CO.,LTD.), the dielectric strength was as high as 80 kV/mm or more. This entailed that large air gaps causing a deterioration in dielectric strength that were contained in the resin composition were little.

The actual density was determined from the volume and weight of the prepared sheet, and when the sheet theoretical density calculated from the filling rate of the hexagonal boron nitride particles and the resin was taken as 100%, the actual density/sheet theoretical density was determined and defined as the resin sheet relative density. The resin sheet prepared with the hexagonal boron nitride powder of the present invention has an actual density/sheet theoretical density ranging from 89 to 97%, and it can be seen that the resin sheet has minute air gaps that do not lower thermal conductivity and dielectric strength. Therefore, the use of the hexagonal boron nitride powder of the present invention has been able to maintain the high thermal conductivity and the dielectric strength as well as to realize the weight reduction of an inorganic filling resin sheet.

The resin composition was produced in the same manner except that the boron nitride powders obtained in Comparative Examples A1 to A5 each were used, and the thermal conductivity, the dielectric strength, and the resin sheet relative density were measured and shown in Table 3. As is obvious from the table, none of the sheets in which the boron nitride powder produced in each of Comparative Examples 1 to 5 was filled were able to achieve to simultaneously have a thermal conductivity of 8.5 W/m·K, a dielectric strength of 80 kV/mm or more, and a resin sheet relative density of 97.0% or less.

### [Table 1]

**Table 1**

| Examples/ Comparative Examples | B/C ratio | Parts by weight in terms of CaO* | Oxygen-containing boron compound Content on 425 µm sieve (%) | Maximum baking temperature (°C) | O% | C% | Impurity element content (ppm) |
|---|---|---|---|---|---|---|---|
| Example A1 | 0.68 | 11 | 2.1 | 1940 | 0.2 | 0.01 | 50 |
| Example A2 | 0.72 | 8 | 2.9 | 1940 | 0.1 | 0.02 | 20 |
| Example A3 | 0.65 | 6 | 1.0 | 1940 | 0.3 | 0.03 | 30 |
| Example A4 | 0.68 | 11 | 0.1 | 1940 | 0.2 | 0.01 | 15 |
| Example A5 | 0.70 | 8 | 0.5 | 1940 | 0.2 | 0.01 | 15 |
| Comparative Example A1 | 0.68 | 11 | 15.2 | 1940 | 0.3 | 0.02 | 50 |
| Comparative Example A2 | 0.80 | 10 | 2.1 | 1940 | 0.2 | 1.0 | 40 |
| Comparative Example A3 | 0.50 | 10 | 2.1 | 1940 | 0.6 | 0.8 | 600 |
| Comparative Example A4 | 0.65 | 25 | 2.1 | 1940 | 0.2 | 0.01 | 520 |
| Comparative Example A5 | 0.65 | 3 | 2.1 | 1940 | 0.2 | 0.01 | 20 |
| Comparative Example A6 | 0.68 | 11 | 2.1 | 1800 | - | - | - |

| | | | | | | | |
|---|---|---|---|---|---|---|---|
| *Parts by weight in terms of CaO with respect to 100 parts by weight of the total amount of boron compound (in terms of B₂O₃) and carbon source (in terms of C) | | | | | | | |

### [Table 2]

**Table 2**

| | Hexagonal boron nitride powder | | | | |
|---|---|---|---|---|---|
| Examples/ Comparative Examples | Volume-based median pore diameter D2 (µm) | Specific surface area (m²/g) | Oil absorption (cc/100 g) | D1 D50 (µm) | Content ratio of specific aggregated particles (δ) |
| Example A1 | 1.3 | 4.6 | 78 | 45 | 7.2 |
| Example A2 | 2.3 | 4.6 | 76 | 46 | 5.6 |
| Example A3 | 2.2 | 3.8 | 77 | 40 | 5.8 |
| Example A4 | 1.4 | 6.0 | 95 | 58 | 12.0 |
| Example A5 | 1.7 | 4.7 | 90 | 38 | 52.0 |
| Comparative Example A1 | 1.2 | 4.3 | 100 | 42 | 3.3 |
| Comparative Example A2 | 4.0 | 1.2 | 52 | 20 | - |
| Comparative Example A3 | 1.3 | 6.2 | 85 | 54 | 5.7 |
| Comparative Example A4 | 3.1 | 5.2 | 95 | 47 | 8.7 |
| Comparative Example A5 | 3.4 | 2.2 | 60 | 35 | 6.7 |

### [Table 3]

**Table 3**

| | Thermal conductivity (W/m·K) | Dielectric strength (kV/mm) | Resin sheet relative density (δ) |
|---|---|---|---|
| Example A1 | 8.7 | 95.0 | 93.2 |
| Example A2 | 9.2 | 94.1 | 94.2 |
| Example A3 | 8.9 | 85.0 | 96.2 |
| Example A4 | 9.6 | 89.0 | 92.2 |
| Example A5 | 9.8 | 85.2 | 91.1 |
| Comparative Example A1 | 8.2 | 84.0 | 93.2 |
| Comparative Example A2 | 7.2 | 98.2 | 99.7 |
| Comparative Example A3 | 8.7 | 65.0 | 92.7 |
| Comparative Example A4 | 8.2 | 78.0 | 97.4 |
| Comparative Example A5 | 8.2 | 95.0 | 98.2 |

### Example B1

Acid washing, washing with pure water, and drying were conducted in a method similar to Production Example A1, and then the powder obtained after drying was sifted with a sieve having an opening of 45 um to produce a white hexagonal boron nitride powder containing specific hexagonal boron nitride aggregated particles.

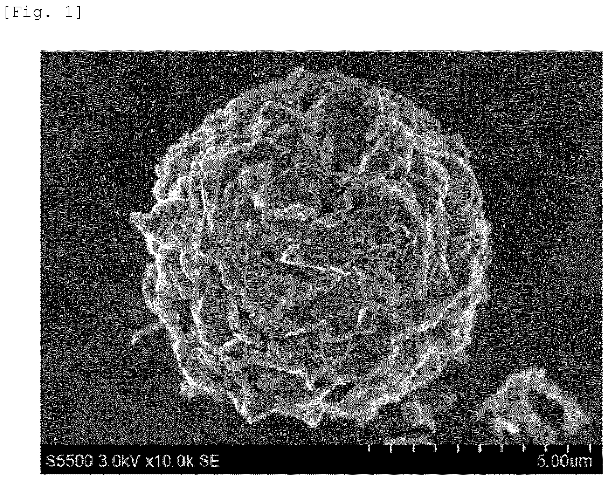

An SEM observation image at 10,000 magnification has confirmed in the resultant hexagonal boron nitride powder the presence of specific hexagonal boron nitride aggregated particles having a longer diameter ranging from 5 to 10 µm, a ratio of longer diameter/shorter diameter ranging from 1.0 to 1.3, a circularity within the range from 0.3 to 0.8, and the maximum diameter of primary particles, which could be confirmed on the surfaces of the aggregated particles, of 4 um or less. The SEM image of such specific hexagonal boron nitride aggregated particles is as shown in Fig. 1.

The abundance ratio of the specific hexagonal boron nitride aggregated particles calculated from the area ratio on the SEM observation image at 500 magnification was 53%.

For one particle having nearly average particle size of the obtained specific hexagonal boron nitride aggregated particles, its concrete values of longer diameter, a ratio of longer diameter/shorter diameter, circularity, and maximum diameter of primary particles are shown in Table 2.

Moreover, the content of impurity elements, the volume-based median pore diameter D1 (pm), and the pore volume (cm³/g) of pores having a pore diameter up to 3 um of the specific hexagonal boron nitride aggregated particles identified from the measured values of the obtained hexagonal boron nitride powder are also shown in Table 4.
The impurity element concentration was 40 ppm.
The oxygen concentration was 0.2%, and the carbon concentration was 0.01%.

### [Mixed hexagonal boron nitride powder and resin composition]

A mixed hexagonal boron nitride powder was obtained by mixing 100 parts by mass of the boron nitride powder containing the specific hexagonal boron nitride aggregated particles manufactured as mentioned above with 5 parts by mass of a hexagonal boron nitride powder (wet particle size distribution D2 = 10 µm, average aspect ratio: 10, impurity element concentration: 40 ppm, oxygen concentration: 0.2%, carbon concentration: 0.01%) including commercially available hexagonal boron nitride single particles. For the obtained mixed hexagonal boron nitride powder, the volume-based median pore diameter D1 (um), the pore volume (cm³/g) of pores having a pore diameter up to 3 um, and the particle size D2 (um) at a cumulative volume frequency of 50% in the wet particle size distribution were shown in Table 5.

The above-mentioned mixed hexagonal boron nitride powder was filled in an epoxy resin to prepare a resin composition, and its thermal conductivity was evaluated. There was prepared a mixture of 100 parts by mass of an epoxy resin (JER 828 manufactured by Mitsubishi Chemical Corporation), 5 parts by mass of a curing agent (Imidazolebased curing agent: CUREZOL 2E4MZ manufactured by Shikoku Chemicals Corporation), and 210 parts by mass of methyl ethyl ketone as a solvent. Next, the above-mentioned varnishlike mixture and the hexagonal boron nitride powder were mixed in a rotating and revolving mixer (MAZERUSTAR manufactured by Kurabo Industries Ltd.) so the content of the base material resin as to be 35% by volume and the content of the hexagonal boron nitride powders as to be 65% by volume, so that a resin composition was produced.

An automatic coater PI-1210 manufactured by TESTER SANGYO CO., LTD., was used for coating/drying of the above-mentioned resin composition onto a PET film with a thickness ranging from 250 to 300 um approximately, and cured under reduced pressure on conditions of a temperature of 200°C, a pressure of 5 MPa, and a retention time of 30 minutes to prepare a sheet having a thickness of 220 um. The sheet was analyzed with a temperature wave thermal analyzer thereby calculating its thermal conductivity. In addition, the dielectric strength was measured with a withstand voltage tester (manufactured by TAMADENSOKU CO.,LTD.). The results were also shown in Table 5.

### Example B2

Example B2 was prepared as with Example B1 except that the amount of the residue on a 425 um sieve of boron oxide was 2.8% by mass, the elemental ratio in terms of (B/C) was 0.73, and the mass content ratio of the above-mentioned oxygen-containing calcium compound in terms of CaO with respect to 100 parts by mass of the total mass of the oxygen-containing boron compound in terms of B₂O₃ and the carbon source in terms of C was 8.2 parts by mass. Various conditions and the measured values were shown in Table 4. The impurity element concentration was 20 ppm. The oxygen concentration was 0.2%, and the carbon concentration was 0.01%.

### [Mixed hexagonal boron nitride powder and resin composition]

The boron nitride powder containing the specific hexagonal boron nitride aggregated particles manufactured as mentioned above was used to prepare a mixed hexagonal boron nitride powder as with Example B1, and further this mixed hexagonal boron nitride powder was mixed with a resin to prepare a resin composition, and its thermal conductivity and dielectric strength were measured.
The results were also shown in Table 5.

### Example B3

Example B3 was prepared as with Example B1 except that the residue on a 425 um sieve of boron oxide was 1.0% by mass, the elemental ratio in terms of (B/C) was 0.66, and the mass content ratio of the above-mentioned oxygen-containing calcium compound in terms of CaO with respect to 100 parts by mass of the total mass of the oxygen-containing boron compound in terms of B₂O₃ and the carbon source in terms of C was 7 parts by mass. Various conditions and the measured values were shown in Table 4. The impurity element concentration was 20 ppm. The oxygen concentration was 0.2%, and the carbon concentration was 0.01%.

### [Mixed hexagonal boron nitride powder and resin composition]

The boron nitride powder containing the specific hexagonal boron nitride aggregated particles manufactured in this way was used to prepare a mixed hexagonal boron nitride powder as with Example B1, and further this mixed hexagonal boron nitride powder was mixed with a resin to prepare a resin composition, and its thermal conductivity and dielectric strength were measured. The results were also shown in Table 5.

### Example B4

Example B4 was prepared in the same manner as in Example B1 except that the boron oxide had a residue on 425 um sieve of 0.1% by mass and a residue on 300 um sieve of 15.0% by mass. Various conditions and the measured values were shown in Table 4. The impurity element concentration was 20 ppm. The oxygen concentration was 0.2%, and the carbon concentration was 0.01%.

### [Mixed hexagonal boron nitride powder and resin composition]

The boron nitride powder containing the specific hexagonal boron nitride aggregated particles manufactured in this way was used to prepare a mixed hexagonal boron nitride powder as with Example B1, and further this mixed hexagonal boron nitride powder was mixed with a resin to prepare a resin composition, and its thermal conductivity and dielectric strength were measured. The results were also shown in Table 5.

### Example B5

Example B5 was prepared in the same manner as in Example B1 except that the residue on a 425 um sieve of boron oxide was 0.5% by mass, the elemental ratio in terms of (B/C) was 0.70, and the mass content ratio of the above-mentioned oxygen-containing calcium compound in terms of CaO with respect to 100 parts by mass of the total mass of the oxygen-containing boron compound in terms of B₂O₃ and the carbon source in terms of C was 8 parts by mass. The measured values were shown in Table 4. The impurity element concentration was 20 ppm. The oxygen concentration was 0.2%, and the carbon concentration was 0.01%.

### Example B6

To 100 parts by mass of the boron nitride powder containing specific hexagonal boron nitride aggregated particles produced in Example B1 was mixed 15 parts by mass of a hexagonal boron nitride powder (wet particle size distribution D2 = 10 µm, average aspect ratio: 10, impurity element concentration: 40 ppm, oxygen concentration: 0.2%, carbon concentration: 0.01%) including commercially available hexagonal boron nitride single particles to prepare a mixed hexagonal boron nitride powder, and further this mixed hexagonal boron nitride powder was mixed with a resin in the same manner as in Example B1 to prepare a resin composition, and its thermal conductivity and dielectric strength were measured. The results were also shown in Table 5.

### [Table 4]

**Table 4**

| | Specific hexagonal boron nitride aggregated particles | | | | | | Hexagonal boron nitride powder |
|---|---|---|---|---|---|---|---|
| | Major axis (µm) | Major axis/minor axis | Circularity | Primary particle maximum diameter (µm) | Volume-based median pore diameter D1 (µm) | Volume of pores of 3 µm or less (cm³/g) | Content ratio of specific aggregated particles (δ) |
| Example B1 | 8.7 | 1.1 | 0.65 | 2.3 | 1.3 | 1.18 | 53 |
| Example B2 | 9.7 | 1.2 | 0.48 | 3.7 | 2.3 | 0.85 | 42 |
| Example B3 | 5.1 | 1.3 | 0.55 | 1.2 | 1.1 | 1.60 | 38 |
| Example B4 | 7.6 | 1.1 | 0.73 | 1.6 | 1.3 | 1.30 | 55 |
| Example B5 | 8.6 | 1.2 | 0.65 | 2.8 | 1.7 | 0.77 | 52 |

### [Table 5]

**Table 5**

| | Mixed hexagonal boron nitride powder | | | | Resin composition | |
|---|---|---|---|---|---|---|
| | Content ratio of specific aggregated particles* (δ) | Volume-based median pore diameter D1 (µm) | Volume of pores of 3 µm or less (cm³/g) | Wet particle size distribution (D₅₀) D2 (µm) | Thermal conductivity (W/m·K) | Dielectric strength (kV/mm) |
| Example B1 | 50 | 1. 5 | 1.28 | 12 | 10.2 | 89 |
| Example B2 | 41 | 2.6 | 0.97 | 13 | 9.6 | 95 |
| Example B3 | 37 | 1.3 | 1.71 | 12 | 9.2 | 100 |
| Example B4 | 53 | 1.5 | 1.19 | 13 | 10.4 | 95 |
| Example B5 | 50 | 1.9 | 0.87 | 14 | 9.7 | 85 |
| Example B6 | 47 | 2.9 | 1.87 | 15 | 9.1 | 105 |

| | | | | | | |
|---|---|---|---|---|---|---|
| *Content ratio of specific hexagonal boron nitride aggregated particles in mixed hexagonal boron nitride powder | | | | | | |

As described above, the sheets in each of which the hexagonal boron nitride powder prepared in each of Examples B1 to B6 was filled had a thermal conductivity of 9.0 W/m·K or more, and exhibited high thermal conductivity.
Moreover, the sheets had a high dielectric strength of 80 kV/mm or more, this entailed that large air gaps causing a decrease in dielectric strength that were contained in the resin composition were little.

Note that, as a comparative object, in place of the specific hexagonal boron nitride aggregated particles of Example B1, a commercially available hexagonal boron nitride powder including aggregated particles having a primary particle diameter of 8 um and having a D₅₀ of 25 um was used to prepare a mixed hexagonal boron nitride powder in the same manner as in Example B1, this mixed hexagonal boron nitride powder was used to prepare a resin composition, and various tests were conducted, as a result, the resin composition exhibited a low thermal conductivity of 8.8 W/m·K, and a low dielectric strength of 65 kV/mm.

## Claims

1. Hexagonal boron nitride aggregated particles, wherein aggregated particles of hexagonal boron nitride primary particles have a longer diameter ranging from 5 to 10 µm, a longer diameter/shorter diameter ranging from 1.0 to 1.3, and a circularity within a range from 0.3 to 0.8, and a maximum diameter of primary particles that can be confirmed on a surface of the aggregated particles is 4 um or less from an SEM observation image at 10,000 magnification.

2. A hexagonal boron nitride powder, comprising aggregated particles of hexagonal boron nitride primary particles, wherein a particle size (D₅₀) at a cumulative volume frequency of 50% in a particle size distribution as measured by a wet laser diffraction particle size distribution analysis is from 5 to 150 µm, a volume-based median diameter of pores as measured by a mercury porosimetry is 3.0 um or less, and a content of impurity elements is 500 ppm or less.

3. The hexagonal boron nitride powder according to claim 2, wherein the hexagonal boron nitride aggregated particles according to claim 1 are contained as aggregated particles of the hexagonal boron nitride primary particles.

4. The hexagonal boron nitride powder according to claim 2 or 3, wherein the hexagonal boron nitride powder has a BET specific surface area ranging from 1 to 15 m²/g and an oil absorption ranging from 50 to 190 cc/100 g.

5. A hexagonal boron nitride powder comprising the hexagonal boron nitride aggregated particles according to claim 1 and hexagonal boron nitride single particles, wherein a content ratio of the hexagonal boron nitride aggregated particles is 5% or more, and a particle size (D₅₀) at a cumulative volume frequency of 50% in a particle size distribution as measured by a wet laser diffraction particle size distribution analysis is from 5 to 150 um.

6. The hexagonal boron nitride powder according to claim 5, wherein the volume-based median diameter of pores as measured by a mercury porosimetry is 3.0 um or less.

7. A resin composition comprising the hexagonal boron nitride powder according to any one of claims 2 to 4.

8. A resin composition comprising the hexagonal boron nitride powder according to claim 5 or 6.

9. A resin sheet comprising the resin composition according to claim 7.

10. The resin sheet according to claim 9, wherein a percentage of sheet density to its theoretical density is from 89 to 97%.

11. A resin sheet comprising the resin composition according to claim 8.

12. The resin sheet according to any one of claims 9 to 11, wherein the resin sheet has a dielectric strength of 80 kV/mm or more.
